# EUROPÄISCHE PATENTSCHRIFT

(11) **EP 1 432 752 B1**
(45) Veröffentlichungstag und Bekanntmachung des Hinweises auf die Patenterteilung: **08.03.2006**
(21) Anmeldenummer: 02779454.4
(22) Anmeldetag: 02.10.2002
(51) Int. Cl.: C08G 75/02, C08G 75/18, C08L 81/06, B01D 71/52, B01D 71/66, B01D 71/68, C08G 61/12, C08G 65/48, C08G 75/20, C08G 75/23, C08J 5/22, C08L 81/02, H01M 8/10, C08G 75/14

(54) **VERFAHREN ZUR SULFONIERUNG VON AROMATISCHEN POLYMEREN, POLYELEKTROLYTE SOWIE DEREN VERWENDUNG**
METHOD FOR THE SULPHONATION OF AROMATIC POLYMERS, POLYELECTROLYTES AND USE THEREOF
PROCEDE DE SULFONATION DE POLYMERES AROMATIQUES, POLYELECTROLYTES ET UTILISATION

(30) Priorität: 05.10.2001 DE 10149035
(43) Veröffentlichungstag der Anmeldung: 30.06.2004
(73) Patentinhaber: Fraunhofer-Gesellschaft zur Förderung der angewandten Forschung e.V., 80686 München (DE); Fuma-Tech GmbH, 66386 St. Ingbert/Saar (DE)
(72) Erfinder: ULRICH, Hans-Heinz, 14513 Teltow (DE); RAFLER, Gerald, 14473 Potsdam (DE); BAUER, Bernd, 71665 Vaihingen (DE)
(86) Internationale Anmeldenummer: PCT/EP2002/011077
(87) Internationale Veröffentlichungsnummer: WO 2003/031498

(56) Entgegenhaltungen:
- CN-A- 1 222 535
- DE-A- 19 813 613
- US-A- 6 013 761
- US-B1- 6 262 224

## Beschreibung

Die Erfindung betrifft ein Verfahren zur Sulfonierung von aromatischen Polymeren, insbesondere Polyarylensulfiden und Polyarylenetherketonen durch Umsetzung mit einem Sulfonierungsmittel und einem halogenierten Kohlenwasserstoff. Ebenso betrifft die Erfindung die nach diesem Verfahren herstellbaren Polyelektrolyte sowie deren Verwendung als Kationenaustauschermaterialien in Form von Formkörpern, Folien oder Fasern.

Polyarylensulfide und Polyarylenetherketone werden in vielfältiger Weise werkstofflich genutzt. Diese Polymere sind durch besondere mechanische Eigenschaften sowie eine hohe Widerstandsfähigkeit gegenüber chemischen und thermischen Einwirkungen charakterisiert. Um diese High-Tech-Kunststoffe auch als Funktionsmaterialien, beispielsweise in wäßrigen Medien und für elektrochemische Anwendungen einsetzen zu können, ist es notwendig, ihre Hydrophilie sowie ihre Leitfähigkeit zu erhöhen. Eine Möglichkeit zur Generierung neuer Eigenschaften und damit zur Erweiterung des Applikationsprofils dieser Polymeren besteht in der chemischen Modifizierung. Durch Einführung ionischer Gruppen lassen sich beispielsweise Hydrophilie sowie ggf. elektrische Leitfähigkeit erzeugen. Besonders sulfonierte Produkte dieser Polymeren zeigen interessante Eigenschaften, die aus der Kombination der exzellenten Werkstoffeigenschaften und den Funktionseigenschaften der modifizierten Produkte resultieren.

Die Funktionseigenschaften werden bei gegebener Struktur der funktionellen Gruppen vor allem vom Substitutionsgrad und seiner Verteilung determiniert. Zur Erzielung hoher Effekte werden zumeist hohe Substitutionsgrade sowie eine gleichmäßige Verteilung der Träger der Funktionseigenschaften über das Makromolekül angestrebt. Polymeranaloge Umsetzungen an Polymeren müssen diesen Anforderungen entsprechen, und bei häufig erschwerter Accessibilität der Makromoleküle gegenüber solchen Derivatisierungsreaktionen eine kontrollierte Substitution zu hohen Umsätzen und mit beeinflußbarer Substituentenverteilung ermöglichen. Analytisch wird der Substitutionsgrad bei den polymeren Sulfonsäuren in einfacher Weise durch acidimetrische Titration bestimmt und in mmol Sulfonsäuregruppen pro Gramm Trockensubstanz angegeben (technisch üblicherweise auch Ionic Exchange Capacity [IEC] genannt). Aussagen zur Substituentenverteilung erhält man vorzugsweise aus spektroskopischen Daten (NMR-, IR-Spektroskopie).

Homogene Sulfonierungen in Schwefelsäure oder Schwefelsäure/Oleum, wie sie bei anderen aromatischen Polymeren, z.B. bei Polyetherketonen oder -ethersulfonen beschrieben sind, lassen sich mit Polyarylensulfiden, insbesondere mit all-para-ständigen Strukturen, nicht realisieren. Infolge geringer Löslichkeit in Schwefelsäure gelingt bei dieser heterogenphasig verlaufenden Reaktion nur eine oberflächliche Modifizierung mit niedrigem Substitutionsgrad. Die Einwirkung von konzentrierter Schwefelsäure, rauchender Schwefelsäure mit SO₃-Anteilen unter 10 Masse-% oder gasförmigem SO₃ bei Raumtemperatur führt nur zu Substitutionen in oberflächennahen Bereichen. Derartige Verfahren werden daher auch nur zur Oberflächenmodifizierung, beispielsweise zur Verbesserung der Anfärbbarkeit von Poly-p-phenylensufid-Fäden vorgeschlagen (US 4,199,321). Die Umsetzungen mit Schwefelsäure (96 %ig) bei 100 -110 °C, Schwefelsäure/Oleum-Mischungen bei 20 °C sowie mit Oleum in 1,2-Dichlorethan bei 0 °C scheinen ebenfalls nur heterogen zu verlaufen (US 4,895,634). In der US 4,110,265 wird ein Verfahren beschrieben, bei dem mit 10 bzw. 15 %igem Oleum in heterogener Reaktion zwar eine weitgehende Substitution des Polyphenylensulfids ([IEC] ≈ 3 mmol/g) erreicht wird, die erhaltenen Materialien sind jedoch unlöslich und nichtschmelzbar, so daß eine Verformung zu einem Funktionsbauteil nicht möglich ist. Freies SO₃ im Sulfonierungsmittel führen bei PPS zu Oxidationen der Sulfid- zu Sulfongruppen und Vernetzung, wobei Geschwindigkeit und Ausmaß dieser Nebenreaktionen mit wachsendem SO₃₋Gehalt ebenfalls rasch zunehmen.

Die Umsetzung von Polyphenylensulfid (PPS) mit Chlorsulfonsäure wurde erstmals 1980 in der bereits im Zusammenhang mit der heterogenen Sulfonierung genannten US 4,199,321 erwähnt, wobei durch die Modifizierung des PPS, die Anfärbbarkeit von daraus hergestellten Fäden verbessert werden soll. Weitergehende, über die Fadenoberfläche hinausgehende Substitution sowie die Synthese hochsubstituierter Sulfonierungsprodukte wurde bei der kurzzeitigen Einwirkung eines Chlorsulfonsäure/Tetrachlorkohlenstoff-Gemischs (~8 Vol.-% ClSO₃OH in CCl₄) nicht angestrebt.

Die Umsetzung von PPS zu sulfonierten, in N-Methylpyrrolidon löslichen Produkten ([IEC] ≥ 1 mmol/g) wird in der DE 195 48 425 beschrieben. Dabei wird zunächst das PPS in Chlorsulfonsäure zu 5 bis 15 Masse-% gelöst, anschließend bei Reaktionstemperaturen von 5 bis 20 °C, ggf. unter Zusatz von Oleum oder Essigsäureanhydrid sulfoniert und danach im wäßrigem Medium gefällt. In einem weiteren Verfahren wird das PPS (Forton®) direkt in einer Mischung aus Chlorsulfonsäure und Oleum gelöst. Das Verfahren wird von den Autoren als "Chlorsulfonierung" bezeichnet. Neben der eigentlichen Sulfonierung der aromatischen Einheiten finden zum Teil Substitutionen mit Sulfochloridgruppen, aber auch Oxidationen der Sulfidbrücken zum Sulfoxid und partiell zum Sulfon statt. Darüber hinaus werden auch chlorierte Strukturen in den chemisch sehr uneinheitlichen Reaktionsprodukten beobachtet. Nach diesen Verfahren werden zur Herstellung von 1 kg sulfoniertem Polyphenylensulfid mindestes 18 l Chlorsulfonsäure verbraucht. Als Abprodukt fallen ca. 200 l verdünnte Säure an, die ca. 5 Masse-% HCl und 20 Masse-% H₂SO₄ enthalten. Dabei wurden die zusätzlichen Mengen an Essigsäureanhydrid oder Oleum nicht mit berücksichtigt. Eine Nutzung dieser Verfahren mit Chlorsulfonsäure als Lösungs- und Sulfonierungsmittel ist infolge des hohen Chlorsulfonsäureverlustes und der chemisch nur sehr uneinheitlichen Sulfonierungsprodukte wenig realistisch.

Auch in der DD 9910165 wird eine in homogener Phase ablaufende Sulfonierung von PPS bzw. PPS-ähnlichen Polymeren mit Schwefelsäure beschrieben. Als Ausgangsmaterial wird ein von den Autoren selbst nach Angaben von McGrath, Polymer Preprints 38 [1997] 109-112, hergestelltes Poly(phenylensulfid-sulfon) eingesetzt. Dazu ist bekannt, daß Poly-1,4-phenylen-sulfid (PPS) durch Behandlung mit Oxidationsmitteln in organolösliche Produkte überführt werden kann, wie sie beispielsweise auch in der DE 196 36 692 beschrieben werden. Es kann nicht ausgeschlossen werden, daß durch die partielle Umwandlung der Sulfid- in Sulfoxid und/oder Sulfon-Brücken auch die Löslichkeit in Schwefelsäure besser und damit ein in homogener Phase ablaufender Sulfonierungsprozeß in diesem Medium möglich ist.

Im Gegensatz zu den Polyarylensulfiden bereitet die Sulfonierung aromatischer Polyetherketone der Strukturen (1) und (2)

[-0-Phen-O-Phen-CO-Phen-]ₙ (1)

[-0-Phen-CO-Phen-]ₙ (2)

in konzentrierter Schwefelsäure (1) (EP 008 895 oder Jin, Bishop, Ellis, Karasz, Brit. Polym. J, 17 (1985)4 - 10) bzw. in Schwefelsäure/Oleum-Gemischen (2) (DE 196 10 303 oder Ulrich, Rafler, Angew. Makromol. Chem. 263 (1998) 71 - 78) keine Schwierigkeiten. Nach diesen Verfahren werden jedoch genauso wie bei der zuvor beschriebenen Sulfonierung von PPS nach DE 195 48 425 überproportional große Mengen an Sulfonierungsreagens verbraucht (10 1/kg sulfoniertes Material). Pro kg Polyelektrolyt müssen - 200 1 verunreinigter Abfallsäure entsorgt werden. Das gleiche Problem ergäbe sich, würde die Sulfonierung von Polyphenylenetherketonen nach der in der US 5,741,408 beschriebenen Verfahrensweise mit Chlorsulfonsäure durchgeführt werden.

Ausgehend von diesen Nachteilen des Standes der Technik ist es Aufgabe der vorliegenden Erfindung, ein Verfahren zur Sulfonierung von aromatischen Polymeren bereitzustellen, durch das chemisch einheitliche Sulfonierungsprodukte in wirtschaftlich und technisch effizienter Weise herstellbar sind. Gleichzeitig soll der Anteil an beim Verfahren anfallenden Abfallprodukten möglich gering gehalten werden.

Diese Aufgabe wird durch das erfindungsgemäße Verfahren mit den Merkmalen des Anspruchs 1 sowie durch die hiermit hergestellten Polyelektrolyte mit den Merkmalen des Anspruchs 19 gelöst. Die weiteren abhängigen Ansprüche zeigen vorteilhafte Weiterbildungen auf. Die Verwendung der erfindungsgemäßen Polyelektrolyte wird in den Ansprüchen 25 und 26 beschrieben.

Erfindungsgemäß wird ein Verfahren zur Sulfonierung von aromatischen Polymeren bestehend aus Wiederholeinheiten der allgemeinen Formel I 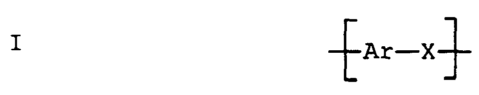
worin X = S und/oder eine Gruppe der allgemeinen Formel II 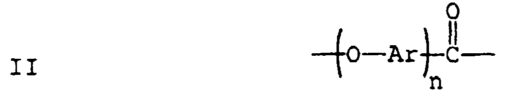
darstellt. Hierbei bedeuten n = 1, 2 oder 3 und Ar unabhängig voneinander 1,4-Phenylen, 1,3-Phenylen, 1,2-Phenylen, Biphenylen, Naphthylen, Anthrylen oder eine andere bivalente aromatische Einheit in unsubstituierter oder durch Alkyl (C₁-C₆), Alkoxy (C₁-C₆) und/oder Aryl substituierter Form. Das Verfahren ist dabei durch die folgenden beiden Schritte gekennzeichnet.
A) Reaktion des aromatischen Polymers mit einem Sulfonierungsmittel und einem halogenierten Kohlenwasserstoff.
B) Ausfällen der sulfonierten Verbindungen mit einem polaren Fällmittel.

Bevorzugt wird als Sulfonierungsmittel Chlorsulfonsäure eingesetzt. Der Anteil des Sulfonierungsmittels im Sulfonierungsgemisch beträgt dabei bevorzugt unter 50 Vol.-%, besonders bevorzugt zwischen 10 und 30 Vol.-%.

Als halogenierte Kohlenwasserstoffe werden bevorzugt Dichlormethan, Chloroform, Tetrachlorkohlenstoff, Dichlorethan, Trichlorethan, Tetrachlorethan oder Gemische hiervon verwendet. Besonders bevorzugt unter diesen sind aus ökotoxikologischen Gründen Dichlormethan und 1,2-Dichlorethan.

Bevorzugt wird als Fällmittel Ethanol und/oder Wasser verwendet. Bevorzugt wird dabei wasserhaltiges Ethanol (5-10 Vol.-%) in den Reaktionsansatz eingetropft. Es ist aber auch möglich, daß die Reaktionslösung in das Fällmittel eingerührt wird. Die erfindungsgemäßen Verbindungen können anschließend als grobkörniges, leicht gequollenes, gelbverfärbtes Pulver isoliert werden. Bei Zusatz des Fällmittels in das Rührgefäß kann dessen Menge sehr niedrig gehalten werden, bevorzugt zwischen 1 und 50 % des Reaktionsvolumens. So ist die resultierende Menge der aufzuarbeitenden Flüssigkeit relativ gering, weniger als 10 1/kg sulfoniertes Produkt. Dabei kann der halogenierte Kohlenwasserstoff abgetrennt, zurückgewonnen und erneut als Lösungsmittelkomponente des Sulfonierungsgemisches eingesetzt werden. Im Anschluß wird das gefällte Produkt durch eine Extraktion mit Wasser gereinigt und abschließend bei 60 °C getrocknet.

Bevorzugt wird im Anschluß das gefällte Produkt durch eine Extraktion mit Wasser gereinigt. Dabei kann der halogenierte Kohlenwasserstoff abgetrennt, rückgewonnen und erneut als Lösungsmittelkomponente des Sulfonierungsgemisches eingesetzt werden. In einer weiteren vorteilhaften Ausgestaltung des Verfahrens wird anschließend das gereinigte Produkt bei 60 °C getrocknet.

Besonders vorteilhaft ist es, daß die Sulfonierung bereits ab Chlorsulfonsäureanteil von über 20 Vol.-% im Gemisch ausschließlich in homogener Phase verläuft. Hierbei wird der Sulfonierungsgrad der Produkte in erster Linie durch Variation der Prozeßtemperatur und der Prozeßdauer kontrolliert eingestellt.

Der Sulfonierungsgrad der Produkte wird wie bereits diskutiert durch acidimetrische Titration mit 0,1 n NaOH bzw. mittels ¹³C-NMR-Spektroskopie bestimmt und üblicherweise als Ionic Exchange Capacity (IEC) in mmol-Sulfonsäuregruppen pro g Trockensubstanz angegeben. Ab IEC ≥ 1,4 mmol/g werden die Produkte in polar aprotischen Lösungsmitteln wie Dimethylformamid, Dimethylacetamid, N-Methylpyrrolidon oder Dimethylsulfoxid löslich und lassen sich daraus zu Folien oder Membranen verarbeiten. ¹³C-NMR-spektroskopisch konnte nur Substitution durch Sulfonsäuregruppen nachgewiesen werden. Fehlstrukturen, die durch Aromatenchlorierung oder Oxidationen verursacht werden können, sind in den erfindungsgemäß hergestellten Polyarylehsulfidsulfonsäuren analytisch nicht nachweisbar.

In einer bevorzugten Variante werden als aromatische Polymere Polyarylensulfide der allgemeinen Formel I mit X = S eingesetzt. Die mittleren Molmassen M_{w} geeigneter Polyarylensulfide liegen vorzugsweise im Bereich zwischen 50.000 und 100.000 g/mol. Besonders bevorzugt unter den Polyarylensulfiden ist lineares Poly-1,4-Phenylensulfid. Diese Materialien sind handelsüblich, so z.B. Fortron® (Ticona AG) oder Ryton® (Phillips Petroleum).

In einer weiteren vorteilhaften Variante kann das Verfahren zur Sulfonierung auch ausgehend von Polyetheretherketonen der allgemeinen Formel I mit 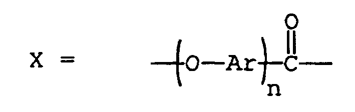
und n = 2 durchgeführt werden.

Die mittleren Molmassen Mw geeigneter Polyetherehterketone liegen vorzugsweise im Bereich zwischen 30.000 und 60.000 g/mol. Besonders bevorzugt werden im Rahmen dieser Erfindung Poly(oxi-1,4-phenylen-oxi-1,4-phenylen-carbonyl-1,4-phenylen) (PEEK) eingesetzt. Diese Verbindung ist unter dem Handelsnamen Victrex® _{PEEK}™ kommerziell erhältlich.

In einer besonders vorteilhaften Ausgestaltung des Verfahrens kann das Polyarylensulfid auch gleichzeitig mit dem Polyetheretherketon (PEEK) sulfoniert werden. Dies ermöglicht es, diese beiden Verbindungen in beliebigen Mischungsverhältnissen in einem Reaktionsansatz gemeinsam und unter gleichen Reaktionsbedingungen umzusetzen. Dies eröffnet der Applikation dieser Sulfonierungsprodukte als Ionenaustauschermaterialien völlig neuartige Möglichkeiten, da sich die applikationsrelevanten Eigenschaften wie Quellverhalten in wäßrigen Phasen, Selektivität im Trennverhalten gegenüber kleinen Molekülen, der reinen Polyarylensulfid- bzw. Polyarylenetheretherketonsulfonsäuren von denen der Gemische signifikant unterscheiden. PEEK und PPS sind besonders gut zur gemeinsamen Sulfonierung, Isolierung und Aufarbeitung geeignet.

Die Sulfonierungsreaktion der Polyarylensulfide und/oder Polyetherehterketone erfolgt bevorzugt bei einer Temperatur zwischen -20 und 40 °C, besonders bevorzugt zwischen 5 und 20 °C.

Der Grund dafür, daß die Polyarylensulfide und die Polyetherehterketone in einem gemeinsamen Reaktionsansatz umgesetzt werden können, liegt darin, daß nach dem erfindungsgemäßen Verfahren PEEK nahezu die gleiche Reaktivität wie Poly-1,4-phenylensulfid zeigt. Es ist ebenso ab Chlorsulfonsäureanteilen von mehr als 20 Vol.-% vollständig im Gemisch aus Sulfonierungsmittel und halogeniertem Kohlenwasserstoff löslich. Und so ist der Substitutionsgrad analog zu den Polyarylensulfiden bei dieser Chlorsulfonsäurekonzentration vor allem von der Prozeßtemperatur und der Prozeßdauer abhängig.

PEK ist ebenfalls nach der beschriebenen Verfahrensweise in einem Gemisch aus Sulfonierungsmittel und halogeniertem Kohlenwasserstoff mit Chlorsulfonsäureanteilen über 20 Vol.-% homogenphasig sulfonierbar. Allerdings müssen für dieses Polymer höhere Temperaturen angewendet und damit höher sienende halognierte Kohlenwasserstoffe eingesetzt werden. Besonders geeignet hierbei hat sich 1,2-Dichlorethan herausgestellt.

Erfindungsgemäß werden auch Polyelektrolyte, die gemäß dem erfindungsgemäßen Verfahren herstellbar sind, bereitgestellt. Diese zeichnen sich durch eine gleichmäßige Sulfonierung aus, wobei der Substitutionsgrad oberhalb von 0,5 mmol, bevorzugt oberhalb von 1,4 mmol Sulfonsäuregruppen pro g Trockensubstanz liegt. Ebenso können diese Polyelektrolyte in Dimethylformamid, Dimethylacetamid, N-Methylpyrrolidon oder Dimethylsulfoxid in Mengen über 5 Masse-% gelöst werden.

Die erfindungsgemäßen Polyelektrolyte finden vor allen Dingen bei der Herstellung von Beschichtungen, Formkörpern, Folien, Membranen oder Fasern Anwendung. Hierzu zählt vor allem die Herstellung von protonenleitfähigen Membranen.

Anhand der nachfolgenden Beispiele soll der erfindungsgemäße Gegenstand näher erläutert werden, ohne diesen auf die Ausführungsbeispiele zu beschränken.

### Beispiel 1

10 g gut getrocknetes Ryton® (Typ P-4, Pulver) werden bei 10 °C in 40 ml Dichlormethan, von dem ein Rest von 5 ml zurückbehalten wird, in einem temperierbarem Rührgefäß suspendiert. Unter Rühren werden 10 ml Chlorsulfonsäure langsam eingetropft und mit dem restlichem Dichlormethan nachgespühlt. Bei Ryton® muß die Chlorsulfonsäure sehr langsam (-0,5 ml/min) zugegeben werden, da sonst heftiges Schäumen erfolgt. Mit beendeter ClSO₃OH-Zugabe ist das Polymer vollständig gelöst. Es wird nur noch mäßig weiter gerührt. Nach insgesamt 6 h bei 10 °C werden unter Rühren 12 ml 96 %iges Ethanol in das Reaktionsgefäß getropft. Das Reaktionsprodukt fällt als dicker, gelber Brei aus, der gut rührbar bleibt und nach 10 bis 20 min problemlos abgesaugt werden kann. Das sulfonierte Produkt wird mit wenig Ethanol gewaschen, zur Entfernung nicht umgesetzter Chlorsulfonsäure mehrmals mit Wasser behandelt und bei 60 °C im Vakuumtrockenschrank über P₄0₁₀ getrocknet.
Ausbeute. 9,4 g ; IEC = 2,04 mmol/g

### Beispiel 2

Analog Beispiel 1 werden 10 g Fortron® (gemahlen) bei 10 °C mit 47,5 ml Dichlormethan und 12,5 ml Chlorsulfonsäure versetzt und gelöst. Nach insgesamt 2 h bei 10 °C wird die Lösung in 250 ml Ethanol eingerührt. Nach Isolieren und Aufarbeiten entsprechend Beispiel 1 wird ein gut handhabbares Pulver erhalten.
Ausbeute: 9,2 g ; IEC = 1,20 mmol/g

### Beispiel 3

50 g Fortron® (Granulat, ungemahlen) werden mit 200 ml Dichlormethan und 75 ml Chlorsulfonsäure analog Beispiel 2 zur Reaktion gebracht. Das unzerkleinerte Granulat löst sich schnell und problemlos wie PPS in Pulverform. Die Fällung der polymeren Sulfonsäure erfolgt durch Einrühren von 75 ml 96 %igem Ethanol. Bei Variation der Prozeßparameter Temperatur und Zeit werden bei Ausbeuten von durchgängig 95 % die in Tabelle 1 zusammengestellten Produkte mit ihren Substitutionsgraden erhalten.

**Tabelle 1: Substitutionsgrade von PPS-Sulfonsäuren in Abhängigkeit von Temperatur und Dauer bei konstanter Chlorsulfonsäurekonzentration**

| **Temperatur [°C]** | **Prozeßdauer [h]** | **IEC [mmol/g]** |
|---|---|---|
| 10 | 2 | 1,30 |
| 10 | 4 | 1,41 |
| 10 | 8 | 1,65 |
| 20 | 2 | 1, 84 |
| 20 | 4 | 2,44 |
| 20 | 8 | 2,84 |

### Beispiel 4

10 g Polyetheretherketon Victrex PEEK® (Typ - 450 P™) werden im Rührgefäß mit der Hauptmenge von 45 ml Dichlormethan überschichtet. Unter Rühren werden zügig 15 ml Chlorsulfonsäure zusammen mit dem restlichem Dichlormethan zugegeben. Der Ansatz wird homogen und bleibt dies auch über die gesamte restliche Versuchsdauer. Selbst ungemahlenes Granulat geht in maximal 30 Minuten vollständig in Lösung. Die Fällung mit Ethanol und anschließende Weiterbehandlung erfolgt wie bereits in Beispiel 1 beschrieben. Bei der Variation der Prozeßparameter Temperatur und Zeit werden bei Ausbeuten von durchgängig 94 % die in Tabelle 2 zusammengestellten Produkte mit ihren Substitutionsgraden erhalten.

**Tabelle 2: Substitutionsgrade von PEEK-Sulfonsäuren in Abhängigkeit von Temperatur und Dauer bei konstanter Chlorsulfonsäurekonzentration**

| **Temperatur [°C]** | **Prozeßdauer [h]** | **IEC [mmol/g]** |
|---|---|---|
| 10 | 2 | 0,92 |
| 10 | 6 | 1,53 |
| 20 | 2 | 1, 30 |
| 20 | 4 | 1,86 |
| 25 | 2 | 1,52 |

### Beispiel 5

10 g des Polyphenylenetherketons Victrex PEK® (gemahlen) werden im Rührgefäß mit der Hauptmenge von 45 ml 1,2-Dichlorethan überschichtet. Unter Rühren werden zügig 15 ml Chlorsulfonsäure zusammmen mit dem restlichem Dichlorethan zugegeben. Nach 20 min wird die Temperatur auf 60 °C erhöht und weitere 8 h bei dieser Temperatur gerührt. Nach Abkühlen auf ca. 10 °C wird wie in Beispiel 1 beschrieben mit Ethanol gefällt und aufgearbeitet.
Ausbeute: 95 % ; IEC = 1,42 mmol/g

### Beispiel 6

Polyphenylenetheretherketon Victrex® (Typ PF 450) und Polyphenylensulfid Ryton® (Typ P-4) werden gemeinsam in einem Reaktionsansatz sulfoniert. 10 g Victrex® werden in 35 ml Dichlormethan suspendiert und unter Rühren mit 15 ml Chlorsulfonsäure versetzt. Nach zweistündigem Rühren bei 20 °C wird die Temperatur auf 10 °C abgesenkt und nach einer Gesamtrührdauer von 165 min werden 10 g Ryton®, 35 ml Methylenchlorid und tropfenweise 15 ml Chlorsulfonsäure dem Sulfonierungsansatz zugeführt. Es wird noch 205 min bei 10 °C gerührt, so daß die gesamte Prozeßzeit 6 h beträgt. Der Reaktionsansatz wird in 500 ml Ethanol eingerührt, abgesaugt und wie in Beispiel 1 beschrieben aufgearbeitet.
Ausbeute: 19,2 g ; IEC = 1,21 mmol/g

### Beispiel 7

5 g Victrex® 450 P (gemahlen) und 5 g Forton® (gemahlen) werden in 40 ml Dichlormethan angerührt und unter Rühren tropfenweise mit 15 ml Chlorsulfonsäure versetzt, wobei nach beendeter Zugabe mit 5 ml Methylenchlorid nachgespühlt wird. Nach 6 h bei 10 °C wird die Reaktionsmasse langsam in 500 ml Ethanol (96 Vol.-%) eingerührt und weiter wie in Beispiel 1 beschrieben aufgearbeitet.
Ausbeute: 94 % ; IEC = 1,43 mmol/g.

## Patentansprüche

1. Verfahren zur Sulfonierung von aromatischen Polymeren bestehend aus Wiederholeinheiten der allgemeinen Formel I 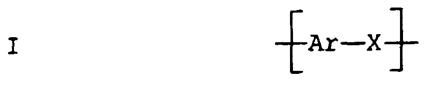
worin X = S und/oder ausgewählt aus Gruppen der allgemeinen Formel II 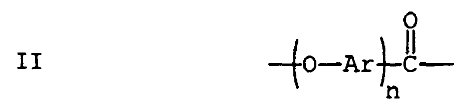
mit n = 1, 2 oder 3 und Ar unabhängig voneinander 1,4-Phenylen, 1,3-Phenylen, 1,2-Phenylen, Biphenylen, Naphthylen, Anthrylen oder eine andere bivalente aromatische Einheit in unsubstituierter oder durch Alkyl (C₁-C₆), Alkoxy (C₁-C₆) und/oder Aryl substituierter Form ist,
mit folgenden Schritten:
A) Reaktion des aromatischen Polymers mit einem Sulfonierungsmittel und einem halogenierten Kohlenwasserstoff und
B) Ausfällen der sulfonierten Verbindung mit einem polaren Fällmittel.

2. Verfahren nach Anspruch 1,
**dadurch gekennzeichnet, dass** als Sulfonierungsmittel Chlorsulfonsäure eingesetzt wird.

3. Verfahren nach mindestens einem der vorhergehenden Ansprüche,
**dadurch gekennzeichnet, dass** als halogenierte Kohlenwasserstoffe Dichlormethan, Chloroform, Tetrachlorkohlenstoff, Dichlorethan, Trichlorethan, Tetrachlorethan oder Gemische hiervon verwendet werden.

4. Verfahren nach mindestens einem der vorhergehenden Ansprüche,
**dadurch gekennzeichnet, dass** als halogenierte Kohlenwasserstoffe Dichlormethan und/oder Dichlorethan verwendet werden.

5. Verfahren nach mindestens einem der vorhergehenden Ansprüche,
**dadurch gekennzeichnet, dass** der Anteil des aromatischen Polymers, bezogen auf das Gesamtsystem, zwischen 5 und 30 Masse-%, bevorzugt zwischen 10 und 20 Masse-% liegt.

6. Verfahren nach mindestens einem der vorhergehenden Ansprüche,
**dadurch gekennzeichnet, dass** der Anteil des Sulfonierungsmittels im Sulfonierungsgemisch zwischen 10 und 30 Vol-% liegt.

7. Verfahren nach mindestens einem der vorhergehenden Ansprüche,
**dadurch gekennzeichnet, dass** als Fällmittel Ethanol und/oder Wasser verwendet wird.

8. Verfahren nach mindestens einem der vorhergehenden Ansprüche,
**dadurch gekennzeichnet, dass** der Anteil des Fällmittels bezogen auf das Gesamtsystem zwischen 1 und 50 Vol-% liegt.

9. Verfahren nach mindestens einem der vorhergehenden Ansprüche,
**dadurch gekennzeichnet, dass** das Fällmittel in die Reaktionslösung aus A) eingetropft wird.

10. Verfahren nach mindestens einem der vorhergehenden Ansprüche,
**dadurch gekennzeichnet, dass** die Reaktionslösung aus A) in das Fällmittel eingerührt wird.

11. Verfahren nach mindestens einem der vorhergehenden Ansprüche,
**dadurch gekennzeichnet, dass** als aromatisches Polymer ein Polyarylensulfid, bevorzugt lineares Poly-1,4-phenylensulfid eingesetzt wird.

12. Verfahren nach mindestens einem der vorhergehenden Ansprüche,
**dadurch gekennzeichnet, dass** als aromatisches Polymer ein Polyetheretherketon, bevorzugt Poly(oxy-1,4-phenylen-oxy-1,4-phenylen-carbonyl-1,4-phenylen) (PEEK) eingesetzt wird.

13. Verfahren nach den Ansprüchen 11 und 12,
**dadurch gekennzeichnet, dass** das Polyarylensulfid und das Polyetheretherketon gemeinsam sulfoniert werden.

14. Verfahren nach mindestens einem der Ansprüche 11 bis 13,
**dadurch gekennzeichnet, dass** Reaktionsschritt A) bei einer Temperatur zwischen -20 und 40°C, bevorzugt zwischen 5 und 20°C durchgeführt wird.

15. Verfahren nach mindestens einem der Ansprüche 1 bis 10,
**dadurch gekennzeichnet, dass** als aromatisches Polymer ein Polyetherketon, bevorzugt Poly(oxy-1,4-phenylen-carbonyl-1,4-phenylen) (PEK) eingesetzt wird.

16. Verfahren nach Anspruch 15,
**dadurch gekennzeichnet, dass** Reaktionsschritt A) bei einer Temperatur zwischen 20 und 100°C, bevorzugt zwischen 60 und 80°C durchgeführt wird.

17. Polyelektrolyte herstellbar gemäß dem Verfahren nach mindestens einem der Ansprüche 1 bis 16,
**dadurch gekennzeichnet, dass** der Substitutionsgrad oberhalb von 0,5 mmol Sulfonsäuregruppe pro Gramm Trockensubstanz liegt.

18. Polyelektrolyte nach Anspruch 17,
**dadurch gekennzeichnet, dass** die Polyelektrolyte in Dimethylformamid, Dimethylacetamid, N-Methylpyrrolidon oder Dimethylsulfoxid in Mengen über 5 Masse-% löslich sind.

19. Polyelektrolyte nach mindestens einem der Ansprüche 17 oder 18,
**dadurch gekennzeichnet, dass** der Substitutionsgrad oberhalb von 1,4 mmol Sulfonsäuregruppe pro Gramm Trockensubstanz liegt.

20. Polyelektrolyte nach mindestens einem der Ansprüche 17 bis 19,
**dadurch gekennzeichnet, dass** der Polyelektrolyt ein sulfoniertes Polyarylensulfid mit X = S ist.

21. Polyelektrolyte nach mindestens einem der Ansprüche 17 bis 19,
**dadurch gekennzeichnet, dass** das aromatische Polymer ein sulfoniertes Polyetheretherketon (PEEK)
mit 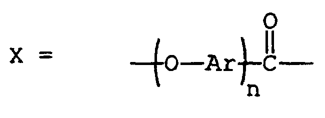 und n = 2 ist.

22. Polyelektrolyte nach mindestens einem der Ansprüche 17 bis 19,
**dadurch gekennzeichnet, dass** das aromatische Polymer ein sulfoniertes Polyetherketon (PEK) mit 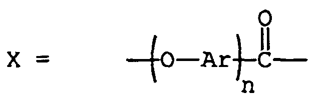 und n = 1 ist.

23. Verwendung der gemäß dem Verfahren nach mindestens einem der Ansprüche 1 bis 16 hergestellten Polyelektrolyte zur Herstellung von Beschichtungen, Formkörpern, Folien, Membranen oder Fasern.

24. Verwendung der gemäß dem Verfahren nach mindestens einem der Ansprüche 1 bis 16 hergestellten Polyelektrolyte zur Herstellung von protonenleitfähigen Membranen.

## Claims

1. Method for the sulphonation of aromatic polymers comprising repeat units of the general formula I
I -[-Ar-X-]-
wherein X = S and/or is selected from groups with the general formula II 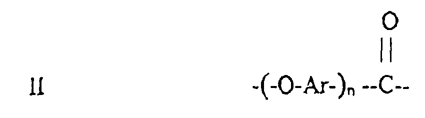
with n = 1, 2 or 3 and Ar is, independently of one another, 1 ,4-phenylene, 1,3-phenylene, 1,2-phenylene, biphenylene, naphthylene, anthrylene or another bivalent aromatic unit in non-substituted form or in a form substituted by alkyl. (C₁-C₆), alkoxy (C₁-C₆) and/or aryl,
with the following steps:
A) reaction of the aromatic polymer with a sulphonating agent and a halogenated hydrocarbon and
B) precipitation of the sulphonated compound with a polar precipitant.

2. Method according to Claim 1, **characterised in that** chlorosulphonic acid is used as sulphonating agent.

3. Method according to at least one of the preceding claims, **characterised in that** dichloromethane, chloroform, carbon tetrachloride, dichloroethane, trichloroethane, tetrachloroethane or mixtures hereof are used as halogenated hydrocarbons.

4. Method according to at least one of the preceding claims, **characterised in that** dichloromethane and/or dichloroethane are used as halogenated hydrocarbons.

5. Method according to at least one of the preceding claims, **characterised in that** the proportion of the aromatic polymer relative to the whole system lies between 5 and 30% mass, preferably between 10 and 20% mass.

6. Method according to at least one of the preceding claims, **characterised in that** the proportion of sulphonating agent in the sulphonating mixture lies between 10 and 30% by vol.

7. Method according to at least one of the preceding claims, **characterised in that** ethanol and/or water is used as precipitant.

8. Method according to at least one of the preceding claims, **characterised in that** the proportion of precipitant relative to the whole system lies between 1 and 50% by vol.

9. Method according to at least one of the preceding claims, **characterised in that** the precipitant is added in drops to the reaction solution from A).

10. Method according to at least one of the preceding claims, **characterised in that** the reaction solution from A) is stirred into the precipitant.

11. Method according to at least one of the preceding claims, **characterised in that** a polyarylene sulphide, preferably linear poly-1,4-phenylene sulphide, is used as aromatic polymer.

12. Method according to at least one of the preceding claims, **characterised in that** a polyether ether ketone, preferably poly(oxy-1,4-phenylene-oxy-1,4-phenylene-carbonyl-1,4-phenylene) (PEEK), is used as aromatic polymer.

13. Method according to Claims 11 and 12, **characterised in that** the polyarylene sulphide and the polyether ether ketone are sulphonated together.

14. Method according to at least one of Claims 1 to 13, **characterised in that** the reaction step A) is conducted at a temperature of between. -20° and 40°C, preferably between 5° and 20°C.

15. Method according to at least one of Claims 1 to 10, **characterised in that** a polyether ketone, preferably poly(oxy-1,4-phenylene-carbonyl-1,4-phenylene) (PEK), is used as aromatic polymer.

16. Method according to Claim 15, **characterised in that** reaction step A) is conducted at a temperature of between 20° and 100°C, preferably between 60° and 80°C.

17. Polyelectrolytes that can be produced using the method according to at least one of Claims 1 to 16, **characterised in that** the degree of substitution lies above 0.5 mmol of sulphonic acid group per gram of dry matter.

18. Polyelectrolytes according to Claim 17, **characterised in that** the polyelectrolytes are soluble in dimethyl formamide, dimethyl acetamide, N-methyl pyrrolidone or dimethyl sulphoxide in amounts above 5% mass.

19. Polyelectrolytes according to at least one of Claims 17 or 18, **characterised in that** the rate of substitution lies above 1.4 mmol of sulphonic acid group per gram of dry matter.

20. Polyelectrolytes according to at least one of Claims 17 to 19, **characterised in that** the polyelectrolyte is a sulphonated polyarylene sulphide with X = S.

21. Polyelectrolytes according to at least one of Claims 17 to 19, **characterised in that** the aromatic polymer is a sulphonated polyether ether ketone (PEEK)
with 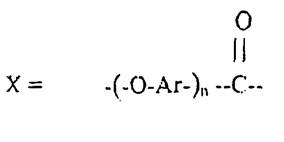 and n=2.

22. Polyelectrolytes according to at least one of Claims 17 to 19, **characterised in that** the aromatic polymer is a sulphonated polyether ketone (PEK)
with 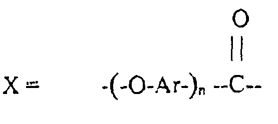 and n = 1,

23. Use of the polyelectrolytes produced using the method according to at least one of Claims 1 to 16 to produce coatings, formed bodies, foils, membranes or fibres.

24. Use of the polyelectrolytes produced using the method according to at least one of Claims 1 to 16 to produce proton-conductive membranes.

## Revendications

1. Procédé de sulfonation de polymères aromatiques constitués d'unités répétitives répondant à la formulé générale I 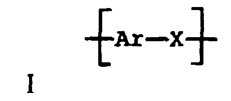
dans laquelle X représente S et/ou est choisi dans les groupes répondant à la formule générale II, 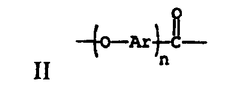
dans laquelle n a pour valeur 1, 2 ou 3 et Ar représente, indépendamment les uns des autres, 1,4-phénylène, 1,3-phénylènre, 1,2- phénylène, biphénylène, naphtylène anthrylène ou une autre unité aromatique bivalente, sous forme non substituée ou substituée par un groupe alkyle en (C₁ - C₆), alcoxy en (C₁- C₆), et/ou aryle,
comprenant les étapes suivantes :
A) réaction du polymère aromatique avec un agent de sulfonation et un hydrocarbure halogéné, et
B) précipitation du composé sulfoné avec un agent de précipitation polaire.

2. Procédé selon la revendication 1,
**caractérisé en ce que**
comme agent de sulfonation, on utilise l'acide chlorosulfonique.

3. Procédé selon au moins l'une des revendications précédentes,
**caractérisé en ce que**
comme hydrocarbures halogénés, on utilise le dichlorométhane, le chloroforme, le tétrachlorure de carbone, le dichloréthane, le trichloréthane, le tétrachloréthane ou des mélanges de ceux-ci.

4. Procédé selon au moins l'une des revendications précédentes,
**caractérisé en ce que**
comme hydrocarbure(s) halogéné(s), on utilise le dichlorométhane et /ou le dichloréthane.

5. Procédé selon au moins l'une des revendications précédentes,
**caractérisé en ce que**
la proportion du polymère aromatique, rapportée au système total, se trouve entre 5 et 30 % en masse, de préférence entre 10 et 20 % en masse.

6. Procédé selon au moins l'une des revendications précédentes,
**caractérisé en ce que**
la proportion de l'agent de sulfonation dans le mélange de sulfonation se trouve entre 10 et 30 % en volume.

7. Procédé selon au moins l'une des revendications précédentes,
**caractérisé en ce que**
comme agent(s) de précipitation on utilise l'éthanol et/ou l'eau.

8. Procédé selon au moins l'une des revendications précédentes,
**caractérisé en ce que**
la proportion de l'agent de précipitation, rapportée au système total, se trouve entre 1 et 50 % en volume.

9. Procédé selon au moins l'une des revendications précédentes,
**caractérisé en ce que**
l'on introduit goutte à goutte l'agent de précipitation dans la solution de réaction de l'étape A).

10. Procédé selon au moins l'une des revendications précédentes,
**caractérisé en ce que**
la solution de réaction de l'étape A) est introduite en remuant dans l'agent de précipitation.

11. Procédé selon au moins l'une des revendications précédentes,
**caractérisé en ce que**
comme polymère aromatique, on utilise un sulfure de polyarylène, de préférence le sulfure de poly-1, 4-phénylène linéaire.

12. Procédé selon au moins l'une des revendications précédentes,
**caractérisé en ce que**
comme polymère aromatique, on utilise une polyétheréthercétone, de préférence le poly(oxy-1,4-phénylèn-oxy-1,4-phénylèn-carbonyl-1,4-phénylène) (PEEC).

13. Procédé selon au moins l'une des revendications 11 et 12,
**caractérisé en ce que**
le sulfure de polyarylène et la polyétheréthercétone sont sulfonés en même temps.

14. Procédé selon au moins l'une des revendications 11 à 13,
**caractérisé en ce que**
l'étape de réaction A) est effectuée à une température située entre - 20°C et 40 °C, de préférence entre 5 et 20 °C.

15. Procédé selon au moins une des revendications 1 à 10,
**caractérisé en ce que**
l'on utilise comme polymère aromatique une polyéthercétone, de préférence le poly(oxy-1,4-phénylèn-carbonyl-1,4-phénylène) (PEC).

16. Procédé selon la revendication 15,
**caractérisé en ce que**
l'étape de réaction A) est effectuée à une température située entre 20 et 100 °C, de préférence entre 60 et 80 °C.

17. Polyélectrolytes pouvant être produits par le procédé selon au moins l'une des revendications 1 à 16,
**caractérisés en ce que**
le degré de substitution se trouve au-dessus de 0,5 mmole de groupe acide sulfonique par gramme de substance sèche.

18. Polyélectrolytes selon la revendication 17,
**caractérisés en ce que**
les polyélectrolytes sont solubles dans le diméthylformamide, le dyméthylacétamide, la N-méthylpyrrolidone ou le diméthylsulfoxyde dans des proportions supérieures à 5 % en masse.

19. Polyélectrolytes selon au moins l'une des revendications 17 ou 18,
**caractérisés en ce que**
le degré de substitution se trouve au-dessus de 1,4 mmole de groupe acide sulfonique par gramme de substance sèche.

20. Polyélectrolytes selon au moins l'une des revendications 17 à 19,
**caractérisés en ce que**
le polyélectrolyte est un sulfure de polyarylène sulfoné avec X = S.

21. Polyélectrolytes selon au moins l'une des revendications 17 à 19,
**caractérisés en ce que**
le polymère aromatique est une polyétheréthercétone (PEEC) sulfonée,
dans laquelle X représente : 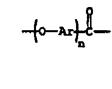 et n = 2.

22. Polyélectrolytes selon au moins l'une des revendications 17 à 19,
**caractérisés en ce que**
le polymère aromatique est une polyéthercétone (PEC) sulfonée,
dans laquelle X représente : 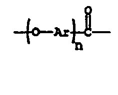 et n = 1.

23. Utilisation des polyétlectrolytes produits par le procédé selon au moins l'une des revendications 1 à 16, pour la production de revêtements, corps moulés, feuilles, membranes ou fibres.

24. Utilisation des polyétlectrolytes produits par le procédé selon au moins l'une des revendications 1 à 16, pour la production de membranes conductrices des protons.
